Europäisches Patentamt

European Patent Office

Office européen des brevets

(19)

(11) Veröffentlichungsnummer: **0 221 975**
**B1**

(12) EUROPÄISCHE PATENTSCHRIFT

(45) Veröffentlichungstag der Patentschrift: 24.10.90

(51) Int. Cl.⁵: **H 04 N 5/445**

(21) Anmeldenummer: **86903327.4**

(22) Anmeldetag: **15.05.86**

(88) Internationale Anmeldenummer:
**PCT/EP86/00287**

(87) Internationale Veröffentlichungsnummer:
**WO 86/06910 20.11.86 Gazette 86/25**

(54) FERNSEHEMPFANGSGERÄT MIT EMPFANGSEINRICHTUNGEN ZUR VERARBEITUNG VON VIDEOTEXT- UND/ODER BILDSCHIRMTEXTSIGNALEN.

(30) Priorität: **17.05.85 DE 3517698**

(43) Veröffentlichungstag der Anmeldung:
**20.05.87 Patentblatt 87/21**

(45) Bekanntmachung des Hinweises auf die
Patenterteilung:
**24.10.90 Patentblatt 90/43**

(84) Benannte Vertragsstaaten:
**AT BE CH DE FR GB IT LI LU NL SE**

(56) Entgegenhaltungen:
**DE-A-3 305 432
DE-C-3 331 007
US-A-3 898 377**

(73) Patentinhaber: **Deutsche Thomson-Brandt
GmbH
Hermann-Schwer-Strasse 3 Postfach 1307
D-7730 Villingen-Schwenningen (DE)**

(72) Erfinder: **HARTMANN, Uwe
Tallardstrasse 15
D-7730 Villingen-Schwenningen (DE)**
Erfinder: **MAI, Udo
Mühleschweg 2
D-7730 VS-Tannheim (DE)**
Erfinder: **OHNEMUS, Fritz
An der Hammerhalde 13
D-7730 Villingen-Schwenningen (DE)**

**Beschreibung**

Die Erfindung geht aus von einem Fernsehempfangsgerät mit Empfangseinrichtungen zur Verarbeitung von Videotext- und/oder Bildschirmtextsignalen mit Ablenkgeneratoren zur zeilen- und bildsynchronen Abtastung der in den Empfangseinrichtungen vorhandenen Zeichengeneratoren.

Um auf dem Bildschirm eines solchen Fernsehempfangsgerätes ein erkennbares Bild zu erhalten, müssen die Ablenkgeneratoren des Empfängers synchron zu den Zeichengeneratoren sein. Es ist bekannt, in den Zeichengeneratoren des Video- bzw. Bildschirmtextdecoders Synchrongeneratoren vorzusehen, welche den Fernsehsynchronsignalen entsprechende Synchronsignale erzeugen, um die Ablenkgeneratoren des Empfangesgerätes zu synchronisieren. Diese bekannte Schaltungsmaßnahme hat den Nachteil, daß die Postvorschrift in bestimmten Betriebsarten des Fernsehempfangsgerätes nicht eingehalten wird, welche fordert, daß der Ton fremder Funkdienste, wie z.B. Polizeifunk, stummgesteuert werden muß. Dazu ist eine Schaltung vorgesehen, welche nur bei Empfang eines normgerechten Fernsehsignals über eine Torschaltung den Ton freigibt, andernfalls diesen sperrt.

Bei dem sogenannten Mix-Betrieb, d.h. bei Empfang von Videotext- bzw. Bildschirmtextsignalen mit gleichzeitiger Wiedergabe eines Fernsehbildes als Hintergrund, kann es vorkommen, daß der Fernsehsender abgeschaltet wird, wenn der Empfänger noch auf den Mix-Betrieb eingestellt ist. Hierbei fehlt zwar das Fernsehbild, im Hintergrund erscheint ein Rauschen bei gleichzeitiger Wiedergabe der Videotext- bzw. Bildschirmtextzeichen im Vordergrund. Die im Videotext- oder Bildschirmtextdecoder einegbauten Synchrongeneratoren übernehmen nun die Synchronisierung des Fernsehempfangsgerätes. Da die Stummsteuerschaltung nicht unterscheidet zwischen Fernsehsignalsynchronimpulsen und den aus den Decodern kommenden Synchronimpulsen, bleibt der Tonkanal durchgeschaltet. Wird nun der Fernsehempfänger auf einen fremden Funkdienst, d.h. keinen Fernsehender, abgestimmt, kann dessen Modulation hörbar werden, was nicht erlaubt ist. Dem könnte man dadurch abhelfen, indem eine zusätzliche Stummsteuerschaltung einschließlich Impulsabtrennstufe und Koinzidenzstufe vorgesehen wird, was aber den Schaltungsaufwand erhöht.

Ein ähnliches Verfahren ist aus DE—A—3 331 007 und US—A— 3 898 377 bekannt, welche eine externe Synchronisierung des Videotextsignals durch das anliegende FBAS-Signal zeigen. Bei Wegfallen des FBAS-Signals (After-hour Betrieb) sind auch dort Stummsteuerschaltungen notwendig.

Der Erfindung liegt die Aufgabe zugrunde, daß bei dem oben geschilderten Betriebsfall der Ton nur bei Empfang eines normgerechten Fernsehsignals durchgeschaltet wird und daß der Speicher des Videotextdecoders bzw. Bildschirmtextdecoders auch dann ausgelesen werden kann und ein erkennbares Bild entsteht, auch wenn der Fernsehsender abgeschaltet wird.

Diese Aufgabe wird durch die im Patentanspruch angegebene Maßnahme gelöst. Die Erfindung besitzt den Vorteil, daß die in den Zeichengeneratoren befindlichen Synchrongeneratoren eingespart werden können, wobei die Wirkung der vorhandenen Stummsteuerschaltung voll erhalten bleibt und somit die Postvorschriften auch in der geschilderten Betriebsart eingehalten werden. Außerdem entfallen komplizierte Umschaltungen der Synchronsignale.

Nachstehend wird die Erfindung mit Hilfe der Zeichnung beschrieben.

Figur 1 zeigt den Stand der Technik;

Figur 2 zeigt die angemeldete Anordnung.

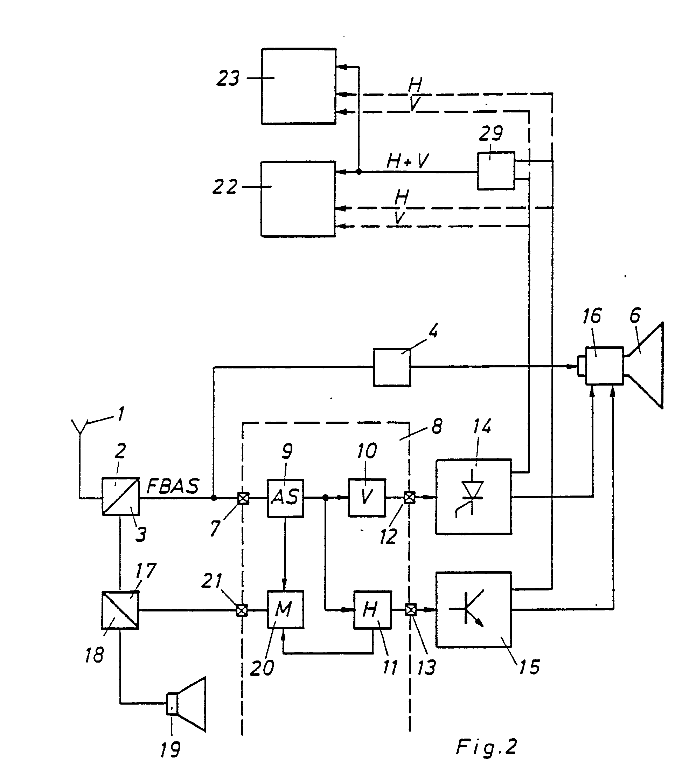

Zunächst wird das nach dem derzeitigen Stand der Technik aufgebaute Schaltungsprinzip dargestellt und erläutert, um nachfolgend mit Hilfe der Figur 2 die wesentlichen Unterschiede zu diesem Stand der Technik herauszustellen.

Über die Antenne 1 gelangt das Fernsehsignal an den Tuner 2. Aus dem ZF-Verstärker 3 wird das FBAS-Signal abgeleitet und über einen Umschaltkontakt a-c eines Umschalters 5 dem Videoverstärker 4 zugeführt, an den die Bildröhre 6 angeschlossen ist. Das FBAS-Signal ist auch an den Eingang 7 einer integrierten Schaltung 8 geführt und gelangt an ein Amplitudensieb 9 zur Abtrennung der Horizontal- und Vertikalsynchronimpulse. Von dort werden die Impulse an die Ansteuerstufen 10 für die Vertikalablenkung und 11 für die Horizontalablenkung geführt. An die Ausgänge 12 und 13 der integrierten Schaltung 8 sind die Vertikalablenkendstufe 14 bzw. die Horizontalablenkstufe 15 angeschaltet, die die Ablenkeinheit 16 speisen. Aus dem ZF-Verstärker 3 wird durch Mischung das Ton-ZF-Signal gebildet und über den Ton-ZF-Verstärker 17 der NF-Stufe 18 zugeleitet, welche einen Lautsprecher 19 speist. Durch Koinzidenz von Zeilensynchronimpulsen aus dem Amplitudensieb 9 und den aus der horizontalen Ablenkung 11 gewonnenen Impulsen wird ein Entriegelungssignal in der Steuerschaltung 20 gewonnen, welches über den Ausgang 21 der integrierten Schaltung 8 nur Fernsehsender hörbar macht. Für die im Fernsehempfangsgerät eingebauten Zusatzschaltungen zum Empfang von Videotext- und BTX-Signalen sei im folgenden nur der Signalverlauf der Synchronimpulse betrachtet. Der Videotextdecoder 22 und der BTX-Decoder 23 werden im Normalfall von den Synchronimpulsen des FBAS-Signals aus der ZF-Stufe 3 synchronisiert. Der Schalter 24 steht im gezeigten Beispiel auf Videotextempfang im sogenannten Mix-Betrieb, d.h. es werden sowohl Videosignale des Fernsehsignals aus der ZF-Stufe als Hintergrund als auch Videotextsignale als Vordergrund auf der Bildröhre 6 sichtbar. Die Synchronsignale des FBAS-Signals gelangen über den Umschalter 25 und die Kontakte b-c des Umschalters 5 an das Amplitudensieb 9. Bei dem sogenannten After-Hour-Betrieb, d.h. nach Abschaltung des Fernsehsenders, müssen auch intern die in den Decodern 22 oder 23 eingebauten Synchrongeneratoren 26 oder 27 umgeschaltet werden, wie es dies z.B. die Stellung des Schalters 28 zeigt. Dann gelangt das dort erzeugte Synchronsignal über den Umschalter 28 und den Umschalter 25 und die Kontakte b-c des Umschalters 5 an das Amplitudensieb 9. Da der Fernsehsender abgeschaltet ist und die Synchronisierung mit Hilfe des Synchrongenerators 27 vorgenommen wird, öffnet die Steuerschaltung 20 den Tonkanal. Der Tuner des Fernsehempfängers kann auf einen fremden Funkdienst abgestimmt werden und diesen hörbar machen. Dies kann nur mit Hilfe einer weiteren Tonunterdrückungsschaltung, die mit 9' und 20' angedeutet ist, unterbunden werden. Dies bedeutet jedoch den zusätzlichen Schaltungsaufwand.

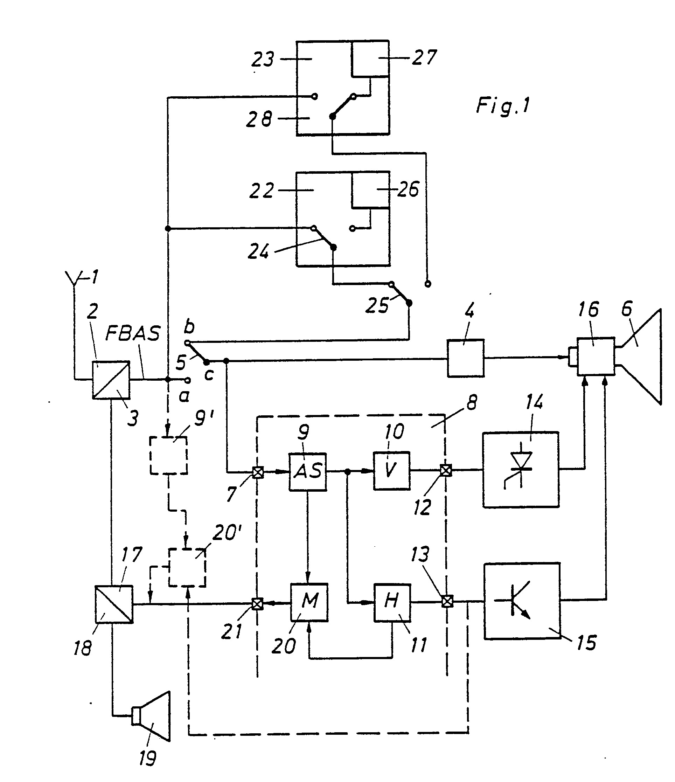

Die Schaltungsanordnung nach Figur 2 dient dazu, diesen Aufwand zu vermeiden und trotzdem eine sichere Tonunterdrückung zu gewährleisten, wenn kein Fernsehsender empfangen wird. Die der Figur 1 entsprechenden Schaltungsteile sind hier wieder mit den gleichen Bezugszeichen versehen. Der Unterschied zu Figur 1 ist dadurch gekennzeichnet, daß die Synchrongeneratoren der Zusatzeinrichtungen 22 und 23 von den ohnehin im Fernsehempfangsgerät vorhandenen Ablenkgeneratoren 14 und 15 gebildet werden. So kann auch bei Wegfall des Fernsehsignals kein Ton mehr hörbar sein, weil die Summsteuerschaltung immer in Betrieb ist. Die Zeilen- und Bildsynchronsignale können den Zusatzeinrichtungen 22 und 23 über eine Verknüpfungsschaltung 29 als zusammengesetztes Synchronsignal zugeführt werden. Unter Wegfall der Verknüpfungsschaltung 29 können die Synchronimpulse für Horizontal und Vertikal auch getrennt den Zusatzeinrichtungen 22 und 23 zugeführt werden, wie es gestrichelt angedeutet ist.

### Bezugszeichenliste

1 Antenne
2 Tuner
3 ZF-Verstärker
4 Videoverstärker
5 Umschalter
6 Bildröhre
7 Eingang
8 integrierte Schaltung
9 Amplitudensieb
10 Ansteuerstufe für Vertikalablenkung
11 Ansteuerstufe für Horizontalablenkung
12 Ausgang
13 Ausgang
14 Vertikalablenkstufe
15 Horizontalablenkstufe
16 Ablenkeinheit
17 ZF-Verstärker
18 NF-Stufe
19 Lautsprecher
20 Steuerschaltung
21 Ausgang
22 Videotextdecoder
23 BTX-Decoder
24 Schalter
25 Umschalter
26 Synchrongenerator VT
27 Synchrongenerator BTX
28 Umschalter
29 Verknüpfungsschaltung

### Patentanspruch

Fernsehempfangsgerät mit Empfangseinrichtungen zur Verarbeitung von Videotext- und/oder Bildschirmtextsignalen mit Ablenkgeneratoren zur zeilen- und bildsynchronen Abtastung der in den Empfangsvorrichtungen vorhandenen Zeichengeneratoren zur Wiedergabe der Zeichen auf dem Bildschirm des Empfangsgerätes, dadurch gekennzeichnet, daß die Zeichengeneratoren von den ohnehin im Fernsehempfangsgerät vorhandenen Ablenkgeneratoren synchronisiert sind.

### Revendication

Appareil récepteur de télévision comprenant des équipements récepteurs pour le traitement de signaux vidéotex et/ou télétexte avec des générateurs de balayage pour le balayage synchrone lignes et images des générateurs de symboles se trouvant dans les équipements de réception pour l'affichage du symboles sur l'écran de l'appareil récepteur, caractérisé en ce que les générateurs de symboles sont synchronisés par les générateurs de balayage existant de toute façon dans l'appareil récepteur de télévision.

### Claim

Television set with receiver devices for the processing of video text and/or screen text signals with sweep generators for the line and screen synchronous scanning of the character generators contained in the receiver devices for reproducing the characters on the screen of the set, characterised in that the character generators are synchronised by the sweep generators contained in any case in the television set.

Fig.1

Fig.2